(19) Europäisches Patentamt
European Patent Office
Office européen des brevets

(11) **EP 4 108 721 A1**

(12) **EUROPEAN PATENT APPLICATION**
published in accordance with Art. 153(4) EPC

(43) Date of publication:
**28.12.2022 Bulletin 2022/52**

(21) Application number: **21886749.7**

(22) Date of filing: **26.10.2021**

(51) International Patent Classification (IPC):
*C08L 25/12* (2006.01)  *C08L 55/02* (2006.01)
*C08L 51/04* (2006.01)  *C08L 33/06* (2006.01)
*C08L 83/04* (2006.01)  *C08F 279/04* (2006.01)
*C08F 212/08* (2006.01)  *C08F 220/44* (2006.01)
*C08F 265/06* (2006.01)  *C08F 220/18* (2006.01)

(52) Cooperative Patent Classification (CPC):
C08F 212/08; C08F 220/18; C08F 220/44;
C08F 265/06; C08F 279/04; C08L 25/12;
C08L 33/06; C08L 51/04; C08L 55/02; C08L 83/04

(86) International application number:
**PCT/KR2021/015080**

(87) International publication number:
**WO 2022/092755 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 30.10.2020  KR 20200143292
22.10.2021  KR 20210141840

(71) Applicant: **Lg Chem, Ltd.**
**Seoul 07336 (KR)**

(72) Inventors:
• **KIM, Seo Hwa**
**Daejeon 34122 (KR)**

• **KANG, Byoung Il**
**Daejeon 34122 (KR)**
• **SHIN, Dong Kun**
**Daejeon 34122 (KR)**
• **KIM, Yeongmin**
**Daejeon 34122 (KR)**
• **CHOI, Eun Jung**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **THERMOPLASTIC RESIN COMPOSITION, METHOD FOR MANUFACTURING SAME, AND MOLDED ARTICLE COMPRISING SAME**

(57)     The present invention relates to a thermoplastic resin composition, a method of preparing the same, and a molded article including the same. More specifically, the present invention provides a thermoplastic resin composition including a base resin including a vinyl cyanide compound-conjugated diene rubber-aromatic vinyl compound graft copolymer, an alkyl acrylate rubber-vinyl cyanide compound-aromatic vinyl compound graft copolymer, and an aromatic vinyl compound-vinyl cyanide compound copolymer and a polysiloxane in a predetermined composition ratio, wherein the alkyl acrylate rubber-vinyl cyanide compound-aromatic vinyl compound graft copolymer has a grafting degree of 42 % or more and is included in an amount of 0.1 to 10 % by weight based on 100 % by weight in total of the base resin.

In addition to excellent colorability, the thermoplastic resin composition of the present invention exhibits low clutch force and has excellent clutch force retention due to excellent dimensional stability against thermal aging.

EP 4 108 721 A1

[FIG. 2D]

**Description**

[Technical Field]

[Cross-Reference to Related Applications]

This application claims priority to Korean Patent Application No. 10-2020-0143292, filed on October 30, 2020, and Korean Patent Application No. 10-2021-0141840, re-filed on October 22, 2021, based on the priority of the above patent, in the Korean Intellectual Property Office, the disclosures of each of which are incorporated herein by reference.

The present invention relates to a thermoplastic resin composition, a method of preparing the same, and a molded article including the same. More particularly, the present invention relates to a thermoplastic resin composition having excellent clutch force, dimensional stability, and colorability by including a base resin including a vinyl cyanide compound-conjugated diene rubber-aromatic vinyl compound graft copolymer, an alkyl acrylate rubber-vinyl cyanide compound-aromatic vinyl compound graft copolymer, and an aromatic vinyl compound-vinyl cyanide compound copolymer and a polysiloxane.

[Background Art]

Acrylonitrile-butadiene-styrene resins (hereinafter referred to as "ABS resins") based on conjugated diene rubber has excellent processability, mechanical properties, and appearance characteristics, and thus are used in various fields such as parts of electric/electronic products, automobiles, small toys, furniture, and building materials.

Meanwhile, since brick toys are manufactured in various colors and shapes, colorability, appearance, and physical property balance of a certain level or more are required, and thus brick toys are mainly manufactured using ABS resins. In addition, since brick toys are played by children with relatively weak strength, assembling and disassembling of the bricks should be made easily with only the child's strength. The degree of ease in assembling and disassembling bricks is expressed as "clutch force". As clutch force decreases, ease in assembling and disassembling bricks increases. As a technique for improving these properties, a technique for adding a high-viscosity polysiloxane is known. In this case, due to decrease in dimensional stability, clutch force increases as a shape is deformed over time, making assembly and disassembly difficult, which may result in injury to a user when bricks are detached.

Therefore, it is required to develop a material that can be used to manufacture bricks of various colors and shapes and can maintain low clutch force for a long period of time.

[Related Art Documents]

[Patent Documents]

KR 10-0717926 B1

[Disclosure]

[Technical Problem]

Therefore, the present invention has been made in view of the above problems, and it is one object of the present invention to provide a thermoplastic resin composition exhibiting high colorability and low clutch force and having excellent clutch force retention due to excellent dimensional stability against thermal aging.

It is another object of the present invention to provide a method of preparing the thermoplastic resin composition and a molded article manufactured using the thermoplastic resin composition.

The above and other objects can be accomplished by the present invention described below.

[Technical Solution]

In accordance with one aspect of the present invention, provided is a thermoplastic resin composition including 100 parts by weight of a base resin including a vinyl cyanide compound-conjugated diene rubber-aromatic vinyl compound graft copolymer (A), an alkyl acrylate rubber-vinyl cyanide compound-aromatic vinyl compound graft copolymer (B), and an aromatic vinyl compound-vinyl cyanide compound copolymer (C); and 0.1 to 0.4 parts by weight of a polysiloxane (D), wherein the graft copolymer (B) has a grafting degree of 42 % or more and is included in an amount of 0.1 to 10 % by weight based on 100 % by weight in total of the base resin.

In addition, the present invention provides a thermoplastic resin composition including 100 parts by weight of a base resin including 10 to 50 % by weight of a vinyl cyanide compound-conjugated diene rubber-aromatic vinyl compound graft copolymer (A), 0.1 to 10 % by weight of an alkyl acrylate rubber-vinyl cyanide compound-aromatic vinyl compound graft copolymer (B) having a grafting degree of 42 % or more, and 40 to 80 % by weight of an aromatic vinyl compound-vinyl cyanide compound copolymer (C) and 0.1 to 0.4 parts by weight of a polysiloxane (D), wherein the thermoplastic resin composition has a clutch force of 22 N or less, wherein, when brick specimens including the thermoplastic resin composition are manufactured and then two of the brick specimens are coupled to each other in an interlocking manner, the clutch force is measured as a maximum tension required to separate the two brick specimens coupled to each other by pulling the brick specimens in a vertical direction at a speed of 10 mm/min using a universal testing machine (Z010, Zwick Roell Co.).

Preferably, the thermoplastic resin composition may have a clutch force of 22 N or less, wherein, when brick specimens including the thermoplastic resin composition are manufactured and then two of the brick specimens are coupled to each other in an interlocking manner, the clutch force is measured as a maximum tension required to separate the two brick specimens coupled to each other by pulling the brick specimens in a vertical direction at a speed of 10 mm/min using a universal testing machine (Z010, Zwick Roell Co.).

Preferably, the thermoplastic resin composition may have a clutch force increase rate of 15 % or less, before and after performing thermal aging of brick specimens manufactured by including the thermoplastic resin composition at a temperature of 57 °C for 24 hours, wherein, when the clutch force is measured as a maximum tension required to separate the two brick specimens coupled to each other by pulling the brick specimens in a vertical direction at a speed of 10 mm/min using a universal testing machine (Z010, Zwick Roell Co.).

Preferably, the base resin may include 10 to 50 % by weight of a vinyl cyanide compound-conjugated diene rubber-aromatic vinyl compound graft copolymer (A), 0.1 to 10 % by weight of an alkyl acrylate rubber-vinyl cyanide compound-aromatic vinyl compound graft copolymer (B), and 40 to 80 % by weight of an aromatic vinyl compound-vinyl cyanide compound copolymer (C).

Preferably, the graft copolymer (A) may include 50 to 80 % by weight of conjugated diene rubber, 5 to 20 % by weight of a vinyl cyanide compound, and 10 to 40 % by weight of an aromatic vinyl compound.

Preferably, in the copolymer (B), a vinyl cyanide compound-aromatic vinyl compound copolymer grafted onto alkyl acrylate rubber may have a weight average molecular weight of 166,000 to 250,000 g/mol.

Preferably, the graft copolymer (B) may include 30 to 60 % by weight of alkyl (meth)acrylate rubber, 10 to 30 % by weight of a vinyl cyanide compound, and 15 to 45 % by weight of an aromatic vinyl compound.

Preferably, the copolymer (C) may include 20 to 40 % by weight of a vinyl cyanide compound and 60 to 80 % by weight of an aromatic vinyl compound.

Preferably, the base resin may further include 1 to 12 % by weight of an alkyl methacrylate compound-vinyl cyanide compound-aromatic vinyl compound copolymer (E), and the copolymer (E) may preferably include 40 to 70 % by weight of an alkyl methacrylate compound, 20 to 50 % by weight of an aromatic vinyl compound, and 1 to 20 % by weight of a vinyl cyanide compound.

Preferably, the polysiloxane (D) may have a kinematic viscosity of 700,000 to 3,000,000 cSt as measured according to ASTM D-445.

Preferably, the polysiloxane (D) may include one or more selected from the group consisting of polydimethylsiloxane, polydiphenylsiloxane, polymethylphenylsiloxane, and polymethylhydrogensiloxane.

In accordance with another aspect of the present invention, provided is a method of preparing a thermoplastic resin composition, the method including kneading and extruding 100 parts by weight of a base resin including a vinyl cyanide compound-conjugated diene rubber-aromatic vinyl compound graft copolymer (A), an alkyl acrylate rubber-vinyl cyanide compound-aromatic vinyl compound graft copolymer (B), and an aromatic vinyl compound-vinyl cyanide compound copolymer (C) and 0.1 to 0.4 parts by weight of a polysiloxane (D) at 200 to 280 °C, wherein the graft copolymer (B) has a grafting degree of 42 % or more and is included in an amount of 0.1 to 10 % by weight based on 100 % by weight in total of the base resin.

In accordance with yet another aspect of the present invention, provided is a molded article including the thermoplastic resin composition.

[Advantageous effects]

According to the present invention, by adding a polysiloxane, in a predetermined content ratio, to a base resin including a vinyl cyanide compound-conjugated diene rubber-aromatic vinyl compound graft copolymer (ABS-based resin), an alkyl acrylate rubber-vinyl cyanide compound-aromatic vinyl compound graft copolymer (ASA-based resin), and an aromatic vinyl compound-vinyl cyanide compound copolymer (SAN-based resin) and adjusting the grafting degree and content of the ASA-based resin within a predetermined range, the present invention advantageously provides a thermoplastic resin composition having excellent colorability, exhibiting low clutch force, and having excellent clutch force retention at high temperatures due to excellent dimensional stability against thermal aging even including a high-viscosity polysiloxane; a method of preparing the thermoplastic resin composition; and a molded article manufactured using the thermoplastic resin composition.

[Description of Drawings]

FIGS. 1A to 1C are drawings showing the structure of a brick specimen of the present invention.
FIGS. 2A to 2D are images for explaining a method of measuring clutch force according to the present invention.

[Best mode]

Hereinafter, a thermoplastic resin composition, a method of preparing the same, and a molded article including the same will be described in detail.
The present inventors confirmed that, when a polysiloxane was added in a predetermined content ratio to a base resin including an ABS-based resin, an ASA-based resin, and a SAN-based resin, and the grafting degree and content of the ASA-based resin were adjusted within a predetermined range, in addition to excellent colorability and initial clutch force characteristics, clutch force retention rate was greatly improved due to excellent dimensional stability against thermal aging. Based on these results, the present inventors conducted further studies to complete the present invention.
The thermoplastic resin composition of the present invention includes 100 parts by weight of a base resin including a vinyl cyanide compound-conjugated diene rubber-aromatic vinyl compound graft copolymer (A), an alkyl acrylate rubber-vinyl cyanide compound-aromatic vinyl compound graft copolymer (B), and an aromatic vinyl compound-vinyl cyanide compound copolymer (C) and 0.1 to 0.4 parts by weight of a polysiloxane (D), wherein the graft copolymer (B) has a grafting degree of 42 % or more and is included in an amount of 0.1 to 10 % by weight based on 100 % by weight in total of the base resin. In this case, colorability may be excellent, initial clutch force may be low, and clutch force retention against thermal aging may be excellent.
In addition, the thermoplastic resin composition of the present invention includes 100 parts by weight of a base resin including 10 to 50 % by weight of a vinyl cyanide compound-conjugated diene rubber-aromatic vinyl compound graft copolymer (A), 0.1 to 10 % by weight of an alkyl acrylate rubber-vinyl cyanide compound-aromatic vinyl compound graft copolymer (B) having a grafting degree of 42 % or more, and 40 to 80 % by weight of an aromatic vinyl compound-vinyl cyanide compound copolymer (C) and 0.1 to 0.4 parts by weight of a polysiloxane (D), wherein the thermoplastic resin composition has a clutch force of 22 N or less, wherein the clutch force is measured as a maximum tension required to separate two brick specimens coupled to each other by pulling the brick specimens in a vertical direction at a speed of 10 mm/min using a universal testing machine (Z010, Zwick Roell Co.). In this case, colorability may be excellent, clutch force may be low, and clutch force retention against thermal aging may be excellent.
In this description, the composition ratio of a (co)polymer may mean the content of units constituting the (co)polymer, or may mean the content of units input during polymerization of the (co)polymer.
Hereinafter, each component constituting the thermoplastic resin composition of the present invention will be described in detail.

## (A) Vinyl cyanide compound-conjugated diene rubber-aromatic vinyl compound graft copolymer

The vinyl cyanide compound-conjugated diene rubber-aromatic vinyl compound graft copolymer (A) (hereinafter referred to as "graft copolymer (A)") is preferably included in an amount of 10 to 50 % by weight, more preferably 15 to 47 % by weight, still more preferably 20 to 45 % by weight based on 100 % by weight in total of the base resin. In this case, mechanical properties, moldability, and appearance may be excellent.
For example, the graft copolymer (A) may include 50 to 80 % by weight of conjugated diene rubber, 5 to 20 % by weight of a vinyl cyanide compound, and 10 to 40 % by weight of an aromatic vinyl compound. In this case, mechanical properties, moldability, appearance, and physical property balance may be excellent.
As a preferred example, the graft copolymer (A) includes 50 to 70 % by weight of conjugated diene rubber, 5 to 15 % by weight of a vinyl cyanide compound, and 20 to 40 % by weight of an aromatic vinyl compound, more preferably 55 to 65 % by weight of conjugated diene rubber, 10 to 15 % by weight of a vinyl cyanide compound, and 20 to 30 % by weight of an aromatic vinyl compound. Within this range, impact resistance and physical property balance may be excellent.
In this description, a polymer including a certain compound means a polymer prepared by polymerizing the compound, and a unit in the polymer is derived from the compound.
For example, the conjugated diene rubber included in the graft copolymer (A) may have an average particle diameter of 2,500 to 3,500 Å, preferably 2,600 to 3,400 Å, more preferably 2,700 to 3,300 Å. Within this range, impact strength may be excellent without degradation of other properties.

In this description, the average particle diameter of the conjugated diene rubber may be measured by dynamic light scattering, and specifically, may be measured as an intensity value using a Nicomp 380 particle size analyzer (manufacturer: PSS) in a Gaussian mode. As a specific measurement example, a sample is prepared by diluting 0.1 g of latex (TSC: 35 to 50 wt%) 1,000 to 5,000-fold with deionized water or distilled water, i.e., a sample is diluted appropriately so as not to deviate significantly from an intensity setpoint of 300 kHz, and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; measurement wavelength: 632.8 nm; and channel width: 10 μsec.

For example, the graft copolymer (A) may have a grafting degree of 20 to 50 %, preferably 25 to 45 %, more preferably 30 to 45 %. Within this range, compatibility and moldability may be properly secured, and balance between other mechanical properties, compatibility, and moldability may be excellent.

In this description, when measuring grafting degree, 30 g of acetone is added to 0.5 g of dry powder of a graft polymer, agitation is performed at 210 rpm and room temperature for 12 hours using a shaker (SKC-6075, Lab Companion Co.), centrifugation is performed at 18,000 rpm and 0 °C for 3 hours using a centrifuge (Supra R30, Hanil Science Co.) to separate only insoluble matter that is not dissolved in acetone, and the separated insoluble matter is dried via forced circulation at 85 °C for 12 hours using a forced convection oven (OF-12GW, Lab Companion Co.). Then, the weight of the dried insoluble matter is measured, and grafting degree is calculated by Equation 1 below.

[Equation 1]

$$\text{Grafting degree (\%)} = [\text{Weight (g) of grafted monomers} / \text{Weight (g) of rubber}] \times 100$$

In Equation 1, the weight of grafted monomers is a value obtained by subtracting the weight (g) of rubber from the weight of insoluble matter (gel) obtained by dissolving a graft copolymer in acetone and performing centrifugation, and the weight (g) of rubber is the weight of rubber components theoretically included in the graft copolymer powder.

For example, in the graft copolymer (A), the vinyl cyanide compound-aromatic vinyl compound copolymer grafted onto the conjugated diene rubber may have a weight average molecular weight of 50,000 to 110,000 g/mol, preferably 60,000 to 100,000 g/mol. Within this range, due to proper fluidity, processability and impact resistance may be excellent.

In this description, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 μl, column model: 1× PLgel 10 μm MiniMix-B (250 × 4.6 mm) + 1× PLgel 10 μm MiniMix-B (250 × 4.6 mm) + 1× PLgel 10 μm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, the graft copolymer (A) may be prepared by a known polymerization method including emulsion polymerization, suspension polymerization, bulk polymerization, and the like, preferably emulsion polymerization.

For example, based on 100 parts by weight in total of the conjugated diene rubber, the aromatic vinyl compound, and the vinyl cyanide compound included in the graft copolymer (A), the graft copolymer (A) may be prepared by adding, continuously or batchwise, a monomer mixture including 5 to 20 parts by weight of the vinyl cyanide compound and 10 to 40 parts by weight of the aromatic vinyl compound to a mixed solution containing 50 to 80 parts by weight (based on solids) of the conjugated diene rubber latex, 0.1 to 5 parts by weight of an emulsifier, 0.1 to 3 parts by weight of a molecular weight modifier, and 0.05 to 1 part by weight of an initiator and performing polymerization.

As another example, based on 100 parts by weight in total of the conjugated diene rubber, the aromatic vinyl compound, and the vinyl cyanide compound, the graft copolymer (A) may be prepared by adding, at 65 to 75 °C for 2 to 4 hours, a mixed solution containing 5 to 20 parts by weight of the vinyl cyanide compound, 10 to 40 parts by weight of the aromatic vinyl compound, 10 to 50 parts by weight of deionized water, 0.09 to 1.5 parts by weight of an initiator, 0.1 to 2 parts by weight of an emulsifier, and 0.05 to 1.5 parts by weight of a molecular weight modifier, which are mixed in a separate mixing apparatus, to 50 to 80 parts by weight (based on solids) of the conjugated diene rubber latex and 60 to 150 parts by weight of deionized water, adding 0.01 to 0.5 parts by weight of an initiator thereto, increasing temperature to 75 to 80 °C for 30 to 90 minutes to perform graft polymerization, and terminating graft polymerization at a polymerization conversion rate of 93 to 99 % by weight. In this case, impact resistance, mechanical strength, and moldability may be excellent.

In this description, the polymerization conversion rate may be defined as the amount (wt%) of monomers converted into a polymer until measurement time based on 100 % of the total weight of the monomers input until polymerization is completed. A method of measuring the polymerization conversion rate is not particularly limited as long as the method follows this definition. As a specific example, 1.5 g of a prepared (co)polymer latex is dried for 15 minutes in a hot air dryer set to 150 °C, and the weight of the (co)polymer latex is measured. Total solids content (TSC) is calculated by substituting the measured values into Equation 2, and then a polymerization conversion rate is calculated by substituting the total solids content value into Equation 3. In Equation 3, the total weight of added monomers is based on 100 parts by weight.

[Equation 2]

$$\text{Total solids content (TSC; \%)} = \frac{\text{Weight after drying}}{\text{Weight before drying}} \times 100$$

[Equation 3]

Polymerization conversion rate (%)= [Total solids content (TSC) × (Total weight in sum of added monomer, deionized water, and subsidiary raw materials) / 100] – (Weight of added subsidiary raw materials excluding monomers and deionized water)

In Equation 3, the subsidiary raw materials include an initiator, an emulsifier, and a molecular weight modifier, and include an electrolyte when the electrolyte is used.

The conjugated diene rubber may include a conjugated diene compound.

For example, the conjugated diene compound may include one or more selected from the group consisting of 1,3-butadiene, 2,3-dimethyl-1,3-butadiene, 2-ethyl-1,3-butadiene, 1,3-pentadiene, isoprene, chloroprene, and pyrerylene, preferably 1,3-butadiene.

For example, the vinyl cyanide compound may include one or more selected from the group consisting of acrylonitrile, methacrylonitrile, ethylacrylonitrile, and isopropylacrylonitrile, preferably acrylonitrile.

For example, the aromatic vinyl compound may include one or more selected from the group consisting of styrene, $\alpha$-methyl styrene, o-methyl styrene, $\rho$-methyl styrene, m-methyl styrene, ethyl styrene, isobutyl styrene, t-butyl styrene, o-bromo styrene, p-bromo styrene, m-bromo styrene, o-chloro styrene, p-chloro styrene, m-chloro styrene, vinyltoluene, vinyl xylene, fluorostyrene, and vinyl naphthalene, preferably one or more selected from the group consisting of styrene and $\alpha$-methyl styrene, more preferably styrene. In this case, due to proper fluidity, processability and mechanical properties such as impact resistance may be excellent.

In this description, a derivative is a compound produced by substituting a hydrogen atom or an atomic group of an original compound with another atom or atomic group, for example, refers to a compound produced by substitution with a halogen or an alkyl group.

For example, the emulsifier may include one or more selected from the group consisting of allyl aryl sulfonates, alkali methyl alkyl sulfonates, sulfonated alkyl esters, fatty acid soap, and rosin acid alkali salts. In this case, polymerization stability may be excellent.

For example, the molecular weight modifier may include one or more selected from the group consisting of t-dodecyl mercaptan, n-dodecyl mercaptan, n-octyl mercaptan, and carbon tetrachloride, preferably t-dodecyl mercaptan.

For example, the initiator may be a water-soluble persulfuric acid polymerization initiator, a fat-soluble polymerization initiator, or an oxidation-reduction catalyst system. For example, the water-soluble persulfuric acid polymerization initiator may include one or more selected from the group consisting of potassium persulfate, sodium persulfate, and ammonium persulfate, and the fat-soluble polymerization initiator may include one or more selected from the group consisting of cumene hydroperoxide, diisopropyl benzene hydroperoxide, azobis iso butyronitrile, t-butyl hydroperoxide, paramethane hydroperoxide, and benzoylperoxide.

For example, latex prepared by emulsion polymerization may be coagulated using a coagulant such as sulfuric acid, $MgSO_4$, $CaCl_2$, or $Al_2(SO_4)_3$, and then the coagulated latex may be aged, dehydrated, and dried to obtain powdered latex.

For example, when the graft copolymer (A) is prepared, an oxidation-reduction catalyst system is further included. For example, the oxidation-reduction catalyst system may include one or more selected from the group consisting of sodium formaldehyde sulfoxylate, sodium ethylenediamine tetraacetate, ferrous sulfate, dextrose, sodium pyrophosphate, and sodium sulfite. However, the present invention is not limited thereto, and oxidation-reduction catalyst systems commonly used when preparing an ABS-based graft copolymer may be used without particular limitation.

In this description, other additives such as electrolytes, which are not specifically mentioned, may be appropriately selected when necessary. The other additives are not particularly limited, and may be selected within a range generally applied to prepare vinyl cyanide compound-conjugated diene rubber-aromatic vinyl compound graft copolymer latex.

In the method of preparing the graft copolymer, other reaction conditions, such as reaction time, reaction temperature, pressure, and time of input of reactants, other than the above-mentioned conditions, may be appropriately selected and used without particular limitation as long as the other reaction conditions are commonly used in the art to which the present invention pertains.

As the graft copolymer (A), commercially available products may be used as long as the products follow the definition of the present invention.

## (B) Alkyl acrylate rubber-vinyl cyanide compound-aromatic vinyl compound graft copolymer

For example, based on 100 % by weight in total of the base resin, the alkyl acrylate rubber-vinyl cyanide compound-aromatic vinyl compound graft copolymer (B) (hereinafter referred to as "graft copolymer (B)") is included in an amount of 0.1 to 10 % by weight. Within this range, clutch force retention against thermal aging of a composition and colorability may be excellent.

As a preferred example, based on 100 % by weight in total of the base resin, the copolymer (B) may be included in an amount of 1 to 9 % by weight, more preferably 2 to 8 % by weight. Within this range, a desired effect may be achieved.

The graft copolymer (B) may have a grafting degree of 42 % or more, preferably 42 to 60 %, more preferably 45 to 55 %. Within this range, clutch force retention against thermal aging and colorability may be excellent without degradation of other properties.

The grafting degree of the graft copolymer (B) may be measured by the method described for the graft copolymer (A).

For example, the graft copolymer (B) may include 30 to 60 % by weight of alkyl acrylate rubber, 10 to 30 % by weight of a vinyl cyanide compound, and 15 to 45 % by weight of an aromatic vinyl compound, preferably 35 to 60 % by weight of alkyl acrylate rubber, 10 to 25 % by weight of a vinyl cyanide compound, and 20 to 40 % by weight of an aromatic vinyl compound, more preferably 40 to 60 % by weight of alkyl acrylate rubber, 10 to 20 % by weight of a vinyl cyanide compound, and 25 to 40 % by weight of an aromatic vinyl compound. Within this range, clutch force retention against thermal aging and colorability may be excellent without degradation of other properties.

For example, in the graft copolymer (B), the vinyl cyanide compound-aromatic vinyl compound copolymer grafted onto the alkyl acrylate rubber may have a weight average molecular weight of 166,000 to 250,000 g/mol, preferably 170,000 to 230,000 g/mol, more preferably 170,000 to 200,000 g/mol. Within this range, clutch force retention against thermal aging and colorability may be excellent without degradation of other properties.

In this description, to measure weight average molecular weight, the copolymer grafted on the rubber may be separated from the rubber by a separation method commonly used in the art to which the present invention pertains. For example, a sol separated by the method of measuring a grafting degree is dissolved in a THF solvent to prepare a solution, and the solution is filtered using a filter to obtain a filtrate. The filtrate may be used as a specimen for measuring weight average molecular weight.

For example, the alkyl acrylate rubber may have an average particle diameter of 2,000 to 4,000 Å, preferably 2,200 to 3,800 Å, more preferably 2,500 to 3,500 Å. Within this range, a desired effect may be achieved without reducing impact resistance.

The average particle diameter of the alkyl acrylate rubber may be measured in the same manner as the conjugated diene rubber.

For example, the alkyl acrylate may include one or more selected from the group consisting of alkyl acrylates having an alkyl group having 2 to 8 carbon atoms preferably one or more selected from the group consisting of alkyl acrylates having an alkyl group having 4 to 8 carbon atoms, more preferably butyl acrylate or ethylhexyl acrylate.

For example, the aromatic vinyl compound may include one or more selected from the group consisting of styrene, α-methylstyrene, m-methylstyrene, p-methylstyrene, and p-tert-butylstyrene, preferably styrene.

For example, the vinyl cyanide compound may include one or more selected from the group consisting of acrylonitrile, methacrylonitrile, ethylacrylonitrile, and isopropylacrylonitrile, preferably acrylonitrile.

For example, the graft copolymer (B) may be prepared by emulsion polymerization. In this case, chemical resistance, weather resistance, fluidity, and mechanical strength may be excellent.

Emulsion polymerization methods commonly practiced in the art to which the present invention pertains may be used in the present invention without particular limitation. As a preferred example, emulsion graft polymerization may be used.

As the graft copolymer (B), commercially available products may be used as long as the products follows the definition of the present invention.

## (C) Aromatic vinyl compound-vinyl cyanide compound copolymer

For example, based on 100 % by weight in total of the base resin, the aromatic vinyl compound-vinyl cyanide compound copolymer (C) (hereinafter referred to as "copolymer (C)") may be included in an amount of 40 to 80 % by weight, preferably 45 to 78 % by weight, more preferably 50 to 75 % by weight. In this case, mechanical properties, moldability, and appearance may be excellent.

For example, the copolymer (C) may include 20 to 40 % by weight of a vinyl cyanide compound and 60 to 80 % by weight of an aromatic vinyl compound, preferably 20 to 35 % by weight of a vinyl cyanide compound and 65 to 80 % by weight of an aromatic vinyl compound, more preferably 23 to 33 % by weight of a vinyl cyanide compound and 67 to 77 % by weight of an aromatic vinyl compound. Within this range, due to proper fluidity, moldability may be excellent.

For example, the copolymer (C) may have a weight average molecular weight of 70,000 to 200,000 g/mol, preferably 80,000 to 180,000 g/mol, more preferably 90,000 to 160,000 g/mol. Within this range, chemical resistance, processability, and physical property balance may be excellent.

For example, the aromatic vinyl compound included in the copolymer (C) may include one or more selected from the group consisting of styrene, ethyl styrene, α-methylstyrene, o-bromo styrene, p-bromo styrene, m-bromo styrene, o-chloro styrene, p-chloro styrene, m-chloro styrene, vinyltoluene, vinyl xylene, fluorostyrene, and vinyl naphthalene, preferably styrene.

For example, the vinyl cyanide compound may include one or more selected from the group consisting of acrylonitrile, methacrylonitrile, ethylacrylonitrile, and isopropylacrylonitrile, preferably acrylonitrile.

For example, the copolymer (C) may further include 0 to 30 % by weight, preferably 1 to 20 % by weight, more preferably 5 to 10 % by weight of one or more selected from the group consisting of an unsaturated carboxylic acid, an unsaturated carboxylic acid anhydride, and a maleic monomer. In the case of a copolymer polymerized by adding such a comonomer, heat resistance and processability may be excellent.

For example, the unsaturated carboxylic acid may include one or more selected from the group consisting of maleic acid, acrylic acid, and methacrylic acid. For example, the unsaturated carboxylic acid anhydride may be an anhydride of the unsaturated carboxylic acid. For example, the maleimide-based monomer may be a maleimide N-substituted with an alkyl group having 1 to 5 carbon atoms or an aryl group having 6 to 10 carbon atoms, and as a specific example, may be N-phenyl maleimide, maleimide, or a mixture thereof.

The aromatic vinyl compound-vinyl cyanide compound copolymer (C) may be prepared by emulsion polymerization, suspension polymerization, bulk polymerization, continuous bulk polymerization or the like.

As the copolymer (C), commercially available products may be used as long as the products follow the definition of the present invention.

## (D) Polysiloxane

Based on 100 parts by weight of the base resin, the polysiloxane (D) is included in an amount of 0.1 to 0.40 parts by weight. In this case, low clutch force may be implemented without reducing colorability.

Based on 100 parts by weight of the base resin, the polysiloxane (D) is preferably included in an amount of 0.15 to 0.40 parts by weight, more preferably 0.15 to 0.35 parts by weight, still more preferably 0.20 to 0.35 parts by weight. Within this range, low clutch force may be implemented without degradation of other properties.

For example, the polysiloxane (D) may have a kinematic viscosity of 700,000 to 3,000,000 cSt, preferably 1,000,000 to 3,000,000 cSt, more preferably 1,000,000 to 2,000,000 cSt as measured according to ASTM D-445. Within this range, physical property balance between moldability and clutch force may be excellent.

For example, the polysiloxane (D) may include one or more selected from the group consisting of polydimethylsiloxane, polydiphenylsiloxane, polymethylphenylsiloxane, and polymethylhydrogensiloxane, preferably polydimethylsiloxane. In this case, low clutch force may be implemented.

For example, the polysiloxane (D) may be a polysiloxane master batch in which 30 to 60 % by weight of polysiloxane is dispersed in a carrier resin. In this case, the compatibility of the polysiloxane having a high viscosity may be improved, so that desired physical properties improvement may be achieved. For example, the master batch may include one or more selected from the group consisting of an acrylonitrile-butadiene rubber-styrene copolymer, polymethylmethacrylate (PMMA), an epoxy-modified methylmethacrylate copolymer (epoxy-modified MMA copolymer), and a styrene-acrylonitrile copolymer as a carrier resin. In this case, physical properties, such as scratch resistance, weather resistance, and impact resistance, and processability may be excellent. When the polysiloxane (D) is used in a form of a master batch, the weight of the polysiloxane (D) based on the total weight of the base resin is calculated based on the polysiloxane concentration of the master batch. As a specific example, to add 0.25 parts by weight of the polysiloxane (D) based on 100 parts by weight of the base resin, 0.5 parts by weight of a master batch having a polysiloxane concentration of 50 % by weight may be added in order to compound in a desired content.

Preparation methods commonly used in the art to which the present invention pertains may be used to prepare the polysiloxane (D), and commercially available products may be used as long as the products follow the definition of the present invention.

### (E) Alkyl methacrylate compound-vinyl cyanide compound-aromatic vinyl compound copolymer

Optionally, the base resin may further include an alkyl methacrylate compound-vinyl cyanide compound-aromatic vinyl compound copolymer (E) (hereinafter referred to as "copolymer (E)"). For example, based on 100 % by weight in total of the base resin, the copolymer (E) may be included in an amount of 1 to 12 % by weight, preferably 1 to 10 % by weight, more preferably 1 to 8 % by weight, still more preferably 3 to 7 % by weight. In this case, clutch force retention against thermal aging and colorability may be excellent.

For example, the copolymer (E) may include 50 to 85 % by weight of an alkyl methacrylate compound, 10 to 30 % by weight of an aromatic vinyl compound, and 1 to 20 % by weight of a vinyl cyanide compound, preferably 55 to 85 % by weight of an alkyl methacrylate compound, 12 to 27 % by weight of an aromatic vinyl compound, and 1 to 18 % by weight of a vinyl cyanide compound, more preferably 60 to 80 % by weight of an alkyl methacrylate compound, 15 to 25 % by weight of an aromatic vinyl compound, and 2 to 15 % by weight of a vinyl cyanide compound. Within this range, physical property balance of mechanical properties may be excellent.

For example, the alkyl methacrylate compound may include one or more selected from the group consisting of methyl methacrylate, ethyl methacrylate, propyl methacrylate, 2-ethyl hexyl methacrylate, decyl methacrylate, and lauryl methacrylate, preferably methyl methacrylate.

The aromatic vinyl compound and the vinyl cyanide compound included in the copolymer (E) may be appropriately selected within the same range as the copolymer (C).

A preparation method commonly used in the art to which the present invention pertains may be used to prepare the copolymer (E), and commercially available products may be used as long as the products follow the definition of the present invention.

### Thermoplastic resin composition

The thermoplastic resin composition of the present invention includes 100 parts by weight of a base resin including a vinyl cyanide compound-conjugated diene rubber-aromatic vinyl compound graft copolymer (A), an alkyl acrylate rubber-vinyl cyanide compound-aromatic vinyl compound graft copolymer (B), and an aromatic vinyl compound-vinyl cyanide compound copolymer (C) and 0.1 to 0.4 parts by weight of a polysiloxane (D), wherein the graft copolymer (B) has a grafting degree of 42 % or more and is included in an amount of 0.1 to 10 % by weight based to the total weight of the base resin. In this case, low initial clutch force may be expressed, and clutch force retention rate against thermal aging is excellent due to greatly improved dimensional stability. Moreover, colorability may be also excellent.

In addition, the thermoplastic resin composition of the present invention may include 100 parts by weight of a base resin including 10 to 50 % by weight of a vinyl cyanide compound-conjugated diene rubber-aromatic vinyl compound graft copolymer (A), 0.1 to 10 % by weight of an alkyl acrylate rubber-vinyl cyanide compound-aromatic vinyl compound graft copolymer (B) having a grafting degree of 42 % or more, and 40 to 80 % by weight of an aromatic vinyl compound-vinyl cyanide compound copolymer (C) and 0.1 to 0.4 parts by weight of a polysiloxane (D), wherein the thermoplastic resin composition has a clutch force of 22 N or less, wherein the clutch force is measured as a maximum tension required to separate two brick specimens coupled to each other by pulling the brick specimens in the vertical direction at a speed of 10 mm/min using a universal testing machine (Z010, Zwick Roell Co.). In this case, colorability may be excellent, clutch force may be low, and clutch force retention against thermal aging may be excellent.

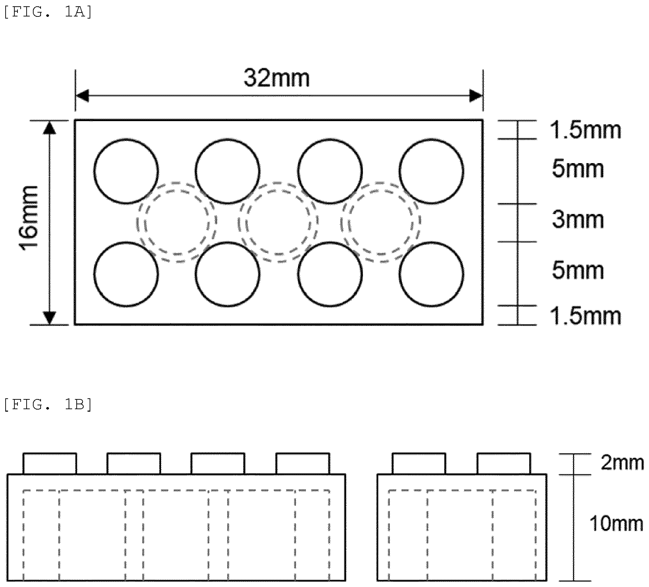

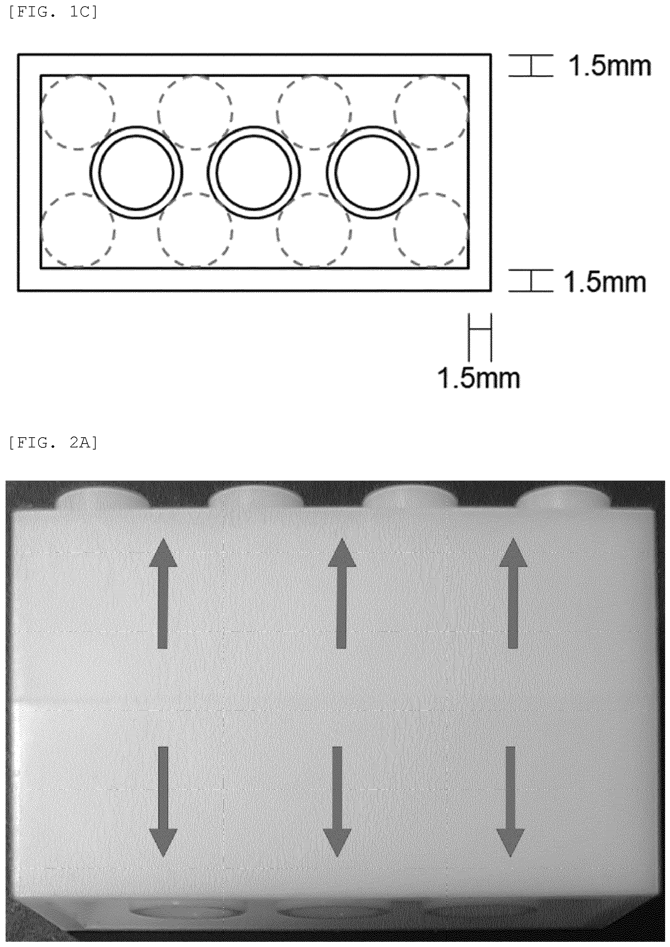

The brick specimen used in the present invention may be manufactured in the form shown in FIGS. 1A to 1C below. FIG. 1A schematically shows the upper surface of the brick specimen, FIG. 1B schematically shows the horizontal(width) cross-section (left) and vertical(length) cross-section (right) of the brick specimen, and FIG. 1C schematically shows the lower surface of the brick specimen. For reference, the gray dotted lines in FIGS. 1A and 1C show the coupling positions where the irregularities of two brick specimens are coupled to each other in an interlocking manner, and the gray dotted line in FIG. 1B shows the position of the lower inner cylinder of the brick specimen.

Referring to FIGS. 1A to 1C below, the brick specimen is a rectangular parallelepiped having a width, length, and height of 32 mm × 16 mm × 10 mm. The top and side surfaces of the rectangular parallelepiped are closed, the bottom thereof is open, and the thickness of one side is 1.5 mm. Eight cylindrical protrusions having a diameter and height of 5 mm × 2 mm are formed on the upper surface of the brick specimen. In this case, four cylindrical protrusions form one cluster, and two clusters are arranged in two rows with an interval of 3 mm. On the lower surface of the brick specimen, three cylinders are formed to physically engage with eight protrusions formed on the upper surface of another brick that is to be coupled to each other.

In this description, when clutch force is measured, two brick specimens are fixed to the upper and lower jigs of a universal testing machine (Z010, Zwick Roell Co.), respectively. Then, the two brick specimen are coupled to each other in an interlocking manner, and the peak value of tension required to separate the specimen connected to the upper jig by pulling the specimen in the vertical direction at a speed of 10 mm/min is measured. Based on the peak value of tension, clutch force is determined. In this description, clutch force may be measured at a temperature of 23 °C and a relative humidity (RH) of 50 %.

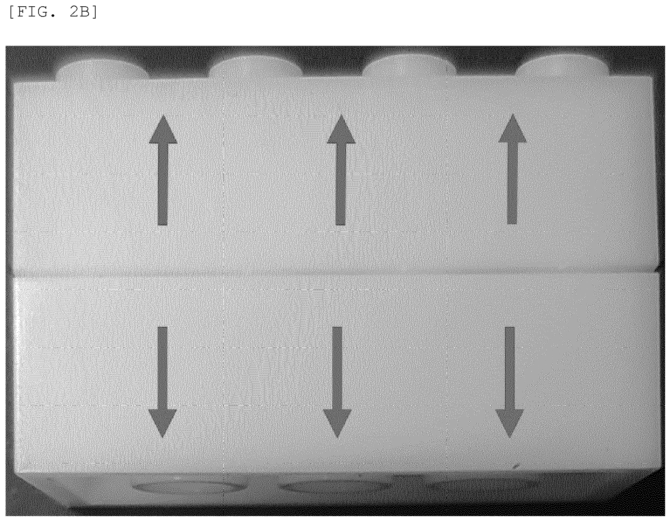

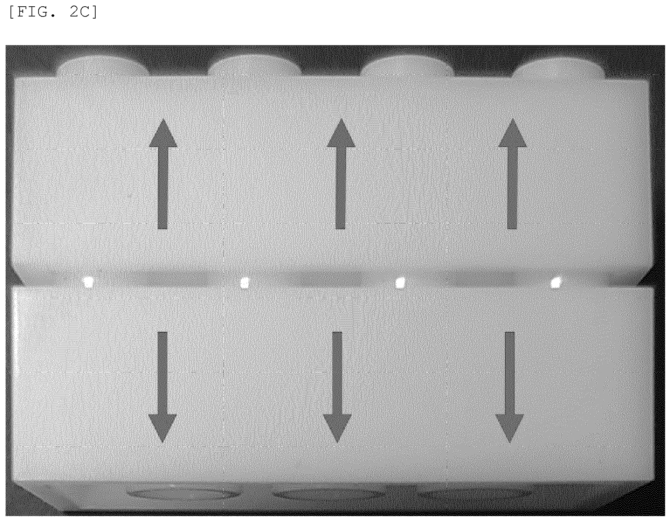

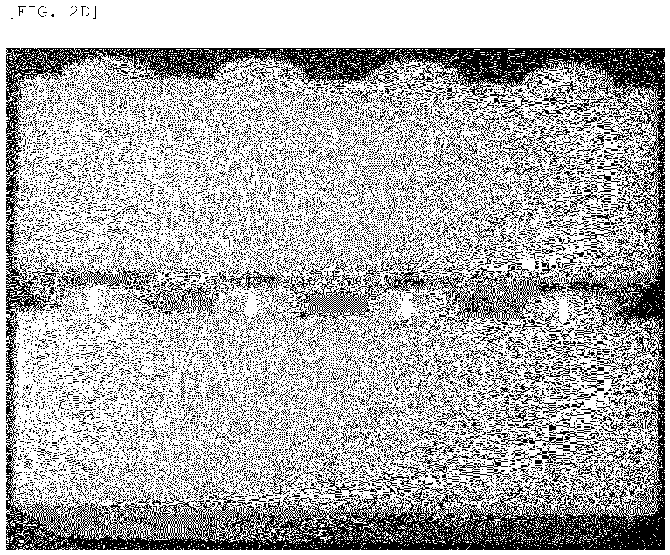

The clutch force measurement process is sequentially shown in FIGS. 2A to 2D below. In FIG. 2 below, arrows indicate the action direction of pulling force. As shown in FIG. 2A, the two brick specimens in a tight engagement state are pulled in the direction opposite to the engagement direction, and tension required until completely separated as shown in FIG. 2D is measured, and clutch force is determined based on the peak value of tension.

In this description, clutch force may be measured using a specimen prepared by injection molding a thermoplastic resin composition including (A) to (D) or a thermoplastic resin composition including (A) to (E) at an injection temperature of 240 °C, a mold temperature of 40 °C, and an injection speed of 30 mm/sec using an injection machine.

For example, within the composition ratio range limited as described above, the thermoplastic resin composition of the present invention may have a clutch force of 22 N or less. Within this range, since initial clutch force is weak, brick toys may be easily assembled and disassembled. Accordingly, brick toys may be easily handled, and injury to a user may be prevented. The clutch force of the thermoplastic resin composition is preferably 20 N or less, more preferably 18 N or less, still more preferably 16 N or less.

For example, when thermal aging of brick specimen manufactured by molding the thermoplastic resin composition is performed at a temperature of 57 °C for 24 hours, and then clutch force is measured after and before thermal aging, the thermoplastic resin composition may have a clutch force increase rate of 15 % or less, preferably 13 % or less, more preferably 12 % or less. In this case, clutch force retention against thermal aging may be excellent without degradation of other properties. The clutch force increase rate (%) may be calculated by Equation 4 below.

[Equation 4]

Clutch force increase rate (%) = {(Clutch force value after thermal aging - initial clutch force value)/Initial clutch force value} × 100

In Equation 4, the initial clutch force value means a clutch force value before thermal aging.

As a specific example, thermal aging may be performed by allowing a brick specimen manufactured using the thermoplastic resin composition to stand for 24 hours in a convection oven set to 57 °C (OF-22, Jeotech Co.). As a preferred example, when measuring clutch force after thermal aging, a brick specimen is exposed to the thermal aging conditions, the brick specimen is taken out of the oven and left at 23 °C for 2 to 3 hours, and then clutch force after thermal aging is measured.

Here, excellent clutch force retention means that the shape change rate of a molded article is small, that is, dimensional stability is excellent. When a clutch force increase rate calculated by the ratio of clutch force after thermal aging to clutch force before thermal aging of the thermoplastic resin composition (initial clutch force) falls within the above range, since the dimensional stability of a brick toy manufactured using the thermoplastic resin composition is excellent, the brick toy may be used stably for a long time.

For example, based on 100 % by weight in total of the base resin, the thermoplastic resin composition may further include 1 to 10 % by weight of the alkyl methacrylate compound-vinyl cyanide compound-aromatic vinyl compound copolymer (E) as a component constituting the base resin. In this case, clutch force retention against thermal aging and colorability may be excellent.

As a preferred example, the thermoplastic resin composition may have a blackness (color L value) of 45 or less, more preferably 42 or less, still more preferably 40 or less as measured using a color meter (Color Eye 7000A, GRETAGMACBETH Co.) according to a CIE 1976 L*a*b* color system. Within this range, colorability may be excellent without degradation of other properties.

In this description, the color L value means an L value of color coordinates according to a CIE 1976 L*a*b* color system. L has a value of 0 to 100. As L approaches 0, the degree of blackness increases. As L approaches 100, the degree of whiteness increases. When the amount of the added colorant is the same when measuring a color L value, colorability is inversely proportional to a color L value. That is, when a color L value is low, a desired color may be expressed more clearly.

## Method of preparing thermoplastic resin composition

A method of preparing the thermoplastic resin composition of the present invention includes a step of kneading and extruding 100 parts by weight of a base resin including a vinyl cyanide compound-conjugated diene rubber-aromatic vinyl compound graft copolymer (A), an alkyl acrylate rubber-vinyl cyanide compound-aromatic vinyl compound graft copolymer (B), and an aromatic vinyl compound-vinyl cyanide compound copolymer (C) and 0.1 to 0.4 parts by weight of a polysiloxane (D) at 200 to 280 °C, wherein the graft copolymer (B) has a grafting degree of 42 % or more and is included in an amount of 0.1 to 10 % by weight based on the total weight of the base resin. In this case, a brick specimen manufactured by injecting the thermoplastic resin composition may have low initial clutch force, and clutch force increase rate after and before performing thermal aging at 57 °C for 24 hours is 15 % or less, indicating that clutch force retention is excellent. Accordingly, user's safety may be maintained for a long time during assembly and disassembly operations.

For example, the kneading and extrusion step may be performed at a temperature of 200 to 280 °C and a screw rotation speed of an extruder of 250 to 400 rpm, preferably at a temperature of 220 to 260 °C and a screw rotation speed of an extruder of 270 to 350 rpm. In this case, mechanical properties, chemical resistance, heat resistance, and appearance may be excellent.

For example, the kneading and extrusion may be performed using one or more selected from a single-screw extruder, a twin-screw extruder, and a Banbury mixer. For example, the kneading and extrusion may be performed by uniformly mixing components using the extruder and performing extrusion to obtain a thermoplastic resin composition in pellet form. In this case, deterioration in mechanical properties and heat resistance may be prevented, and appearance may be excellent.

When necessary during the kneading and extrusion process, the thermoplastic resin composition may optionally include one or more additives selected from the group consisting of a lubricant, a heat stabilizer, a light stabilizer, an antioxidant, a UV stabilizer, a dye, a pigment, a colorant, a release agent, an antistatic agent, an antibacterial agent, a processing aid, a compatibilizer, a metal deactivator, a flame retardant, a smoke suppressant, an anti-drip agent, a foaming agent, a plasticizer, a reinforcing agent, a filler, a matting agent, an antifriction, and an anti-wear agent.

For example, based on 100 parts by weight in sum of the graft copolymer (A), the graft copolymer (B), the copolymer (C), and the polysiloxane (D), the additives may be further included in an amount of 0.01 to 5 parts by weight, preferably 0.05 to 3 parts by weight, 0.05 to 2 parts by weight, or 0.05 to 1 part by weight. Within this range, required physical properties may be effectively realized without reducing the intrinsic properties of the thermoplastic resin composition.

For example, the lubricant may include one or more selected from ethylene bis stearamide, oxidized polyethylene wax, magnesium stearate, calcium stearamide, stearic acid, and silicone oil without being limited thereto.

For example, the silicone oil may include one or more selected from the group consisting of dimethyl silicone oil, methyl hydrogen silicone oil, ester-modified silicone oil, hydroxy silicone oil, carbinol-modified silicone oil, vinyl silicone oil, and silicone acrylate.

For example, as the antioxidant, a phenolic antioxidant, a phosphorus antioxidant, or the like may be used, without being limited thereto.

For example, as the antistatic agent, one or more selected from anionic surfactants and nonionic surfactants may be used, without being limited thereto.

For example, as the release agent, one or more selected from glycerin stearate and polyethylene tetrastearate may be used, without being limited thereto.

**Molded article**

A molded article of the present invention includes the thermoplastic resin composition of the present invention. In this case, colorability may be excellent, initial clutch force may be low, and clutch force retention against thermal aging may be excellent.

Methods commonly used in the art may be used to manufacture the molded article. For example, when the molded article is manufactured, the melt-kneaded material or pellets of the thermoplastic resin composition according to the present invention may be used as a raw material, and injection molding, injection compression molding, extrusion molding, blow molding, press molding, vacuum molding, thermal bending molding, compression molding, calender molding, or rotational molding may be used. In this case, the size and thickness of a molded article may be appropriately adjusted according to the purpose of use.

As a specific example, the molded article may be manufactured by a method including a step of injecting the melt-kneaded material or pellets of the thermoplastic resin composition according to the present invention using an injection machine.

For example, the injection step may be performed by injecting the melt-kneaded material or the pellets at an injection temperature of 200 to 270 °C, a mold temperature of 30 to 80 °C, and an injection speed 10 to 50 mm/sec, preferably at an injection temperature of 230 to 260 °C, a mold temperature of 40 to 70 °C, and an injection speed of 20 to 40 mm/sec.

For example, the molded article may be a brick toy. In this case, due to excellent colorability, various colors may be expressed vividly, and due to low clutch force, assembly and disassembly may be easily performed. In addition, due to excellent dimensional stability, user's safety may be maintained for a long time in assembly and disassembly operations.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.


**[Examples]**

Materials used in Examples and Comparative Examples below are as follows.

(A) Vinyl cyanide compound-conjugated diene rubber-aromatic vinyl compound graft copolymer: An ABS graft copolymer (DP270, LG Chemical Co.) including 60 % by weight of butadiene rubber having an average particle diameter of 3,000 Å, 10 % by weight of acrylonitrile, and 30 % by weight of styrene

(B-1) Alkyl acrylate rubber-vinyl cyanide compound-aromatic vinyl compound graft copolymer: An ASA graft copolymer (SA927, LG Chemical Co., grafting degree: 50 %) including 50 % by weight of butyl acrylate rubber having an average particle diameter of 3,000 Å, 13 % by weight of acrylonitrile, and 37 % by weight of styrene. Here, the styrene-acrylonitrile copolymer grafted onto the butyl acrylate rubber has a weight average molecular weight of 180,000 g/mol.

(B-2) Alkyl acrylate rubber-vinyl cyanide compound-aromatic vinyl compound graft copolymer: An ASA graft copolymer (SA928, LG Chemical Co., grafting degree: 32 %) including 40 % by weight of butyl acrylate rubber having an average particle diameter of 3,000 Å, 15 % by weight of acrylonitrile, and 45 % by weight of styrene. Here, the styrene-acrylonitrile copolymer grafted onto the butyl acrylate rubber has a weight average molecular weight of 150,000 g/mol.

(C) Aromatic vinyl compound-vinyl cyanide compound copolymer: A SAN resin (81HF, LG Chemical Co, weight average molecular weight: 130,000 g/mol) obtained by copolymerizing 24 % by weight of acrylonitrile and 76 % by weight of styrene

(D) Polysiloxane: A polysiloxane master batch (CF-1501, Dow Corning Co.) in which 50 % by weight of a polysiloxane having a kinematic viscosity of 1,000,000 cSt is included in an ABS carrier resin

(E) Alkyl methacrylate compound-vinyl cyanide compound-aromatic vinyl compound copolymer: A SA-MMA resin (XT500, LG Chemical Co.) obtained by copolymerizing 74 % by weight of methyl methacrylate, 7 % by weight of acrylonitrile, and 19 % by weight of styrene

**Examples 1 to 9 and Comparative Examples 1 to 9**

According to the contents shown in Tables 1 and 2 below, the graft copolymer (A), the graft copolymer (B), the copolymer (C), the polysiloxane (D), and optionally, the copolymer (E) were mixed using a super mixer, and the mixture was extruded at an extrusion temperature of 230 °C and a screw rotation speed of 300 rpm using a twin-screw extruder (screw diameter: 25 mm, L/D=36) to obtain pellets.

The thermoplastic resin composition in pellet form was dried at 80 °C for 4 hours or more, and then was injection-molded at an injection temperature of 240 °C, a mold temperature of 40 °C, and an injection speed of 30 mm/sec using an injection machine to prepare a specimen. The specimen was allowed to stand at room temperature (20 to 26 °C) for 24 hours, and then the physical properties thereof were measured.

In addition, the prepared pellets were injection-molded at an injection temperature of 240 °C, a mold temperature of 40 °C, and an injection speed of 30 mm/sec using an injection machine to manufacture a brick specimen having the shape shown in FIGS. 1A to 1C below, and then clutch force was measured.

More specifically, as shown in FIGS. 1A to 1C, the brick specimen was a rectangular parallelepiped having a width, length, and height of 32 mm × 16 mm × 10 mm, and the thickness of one side was 1.5 mm. The lower surface of the brick specimen was open. Eight cylindrical protrusions having a diameter and height of 5 mm × 2 mm were formed on the upper surface of the brick specimen. In this case, four cylindrical protrusions formed one cluster, and two clusters were arranged in two rows with an interval of 3 mm. On the lower surface of the brick specimen, three cylinders were formed to physically engage with eight protrusions formed on the upper surface of another brick.

**[Test Examples]**

The physical properties of the specimens prepared in Examples and Comparative Examples were measured according to the following methods, and the results are shown in Tables 1 and 2 below.

[0141] * Clutch force (N): Two brick specimens were fixed to the upper and lower jigs of a universal testing machine (Z010, Zwick Roell Co.), respectively. Then, by adjusting a crosshead, the irregularities of the two brick specimens were coupled to each other in an interlocking manner, and a maximum tension (peak force) required to separate the two bricks by pulling the specimen connected to the upper jig in the vertical direction at a speed of 10 mm/min was measured. Clutch force was determined based on the maximum tension.

[0142] * Clutch force increase rate (%): Thermal aging of the prepared brick specimen was performed by storing the brick specimen for 24 hours in a convection oven (OF-22, Jeotech Co.) set to 57 °C. Then, the brick specimen was removed from the oven, and was allowed to stand at 23 °C for 3 hours. Then, clutch force was measured in the same manner as above. By substituting clutch force values before and after thermal aging into Equation 4 below, a clutch force increase rate was calculated. Here, clutch force measured before thermal aging is expressed as initial clutch force, and clutch force measured after thermal aging is expressed as clutch force after thermal aging.

[Equation 4]

$$\text{Clutch force increase rate (\%)} = \{(\text{Clutch force value after thermal aging} - \text{Initial clutch force value})/\text{Initial clutch force value}\} \times 100$$

[0143] * Colorability (blackness): 0.4 parts by weight of a colorant (Bayferrox 120 M, Lanxess Co.) was added to 100 parts by weight of the thermoplastic resin composition to prepare a specimen, and a color L value was measured using a color meter (model name: Color Eye 7000A) according to a CIE 1976 L*a*b* color system. In this case, "L=100" means pure white, and "L=0" means pure black. When the content of the colorant is the same, colorability becomes better as the L value decreases.

[Table 1]

| Classification (parts by weight) | Examples | | | | | | | | |
|---|---|---|---|---|---|---|---|---|---|
| | 1 | 2 | 3 | 4 | 5 | 6 | 7 | 8 | 9 |
| (A) ABS | 34 | 30 | 30 | 30 | 25 | 35 | 30 | 30 | 30 |
| (B-1) ASA | 1 | 3 | 5 | 7 | 5 | 5 | 5 | 5 | 5 |
| (B-2) ASA' | - | - | - | - | - | - | - | - | - |

(continued)

| Classification (parts by weight) | Examples | | | | | | | | |
|---|---|---|---|---|---|---|---|---|---|
| | 1 | 2 | 3 | 4 | 5 | 6 | 7 | 8 | 9 |
| (C) SAN | 65 | 67 | 65 | 63 | 70 | 60 | 60 | 65 | 65 |
| (D) Polysiloxane | 0.25 | 0.25 | 0.25 | 0.25 | 0.25 | 0.25 | 0.25 | 0.15 | 0.35 |
| (E) SA-MMA | - | - | - | - | - | - | 5 | - | - |
| Initial clutch force (N) | 14.6 | 15.1 | 14.7 | 14.4 | 15.3 | 14.1 | 14.2 | 15.9 | 14.3 |
| Clutch force (N) after aging | 16.2 | 16.5 | 15.9 | 15.0 | 16.2 | 15.2 | 15.2 | 17.4 | 15.3 |
| Clutch force increase rate (%) before/after aging | 11.0 | 9.3 | 8.2 | 4.2 | 5.9 | 7.8 | 7.0 | 9.4 | 7.0 |
| Colorability (Color L value) | 38.0 | 37.6 | 38.7 | 39.9 | 38.3 | 39.2 | 37.8 | 38.1 | 39.9 |

[Table 2]

| Classification (parts by weight) | Comparative Examples | | | | | | | | |
|---|---|---|---|---|---|---|---|---|---|
| | 1 | 2 | 3 | 4 | 5 | 6 | 7 | 8 | 9 |
| (A) ABS | 35 | 35 | 30 | 20 | 35 | 30 | 30 | 30 | 35 |
| (B-1) ASA | - | - | - | 15 | - | 5 | - | 5 | 0.05 |
| (B-2) ASA' | - | - | - | - | - | - | 5 | - | - |
| (C) SAN | 65 | 65 | 50 | 65 | 65 | 65 | 65 | 65 | 64.95 |
| (D) Polysiloxane | - | 0.25 | 0.25 | 0.25 | 0.50 | 0.50 | 0.25 | 0.02 | 0.25 |
| (E) SA-MMA | - | - | 20 | - | - | - | - | - | - |
| Initial clutch force (N) | 24.0 | 15.1 | 18.5 | 14.9 | 14.2 | 14.0 | 15.2 | 22.8 | 15.1 |
| Clutch force (N) after aging | 28.3 | 21.8 | 24.6 | 16.3 | 21.1 | 14.8 | 19.8 | 25.2 | 21.8 |
| Clutch force increase rate (%) before/after aging | 17.9 | 44.4 | 33.0 | 9.4 | 48.6 | 5.7 | 30.3 | 10.5 | 44.4 |
| Colorability (Color L value) | 36.9 | 37.9 | 36.2 | 43.9 | 42.7 | 43.2 | 38.8 | 37.8 | 37.9 |

As shown in Tables 1 and 2, in the case of Examples 1 to 9 according to the present invention, initial clutch force was 16 N or less, indicating that assembly and disassembly of bricks could be easily performed. In addition, a clutch force increase rate before and after thermal aging was low, showing 11 % or less. Thus, clutch force retention against thermal aging was excellent. In addition, a color L value was small, showing 40 or less, indicating that colorability was excellent.

On the other hand, in the case of Comparative Examples 1 to 9 outside the present invention, initial clutch force exceeded 18 N, indicating that clutch force characteristics was poor, or a clutch force increase rate before and after thermal aging exceeded 15 %, indicating that dimensional stability was poor. In addition, a color L value exceeded 40, indicating that colorability was degraded.

## Claims

1. A thermoplastic resin composition, comprising:

100 parts by weight of a base resin comprising a vinyl cyanide compound-conjugated diene rubber-aromatic vinyl compound graft copolymer (A), an alkyl acrylate rubber-vinyl cyanide compound-aromatic vinyl compound graft copolymer (B), and an aromatic vinyl compound-vinyl cyanide compound copolymer (C); and 0.1 to 0.4 parts by weight of a polysiloxane (D),

wherein the graft copolymer (B) has a grafting degree of 42 % or more and is comprised in an amount of 0.1 to 10 % by weight based on 100 % by weight in total of the base resin.

2. The thermoplastic resin composition according to claim 1, wherein the thermoplastic resin composition has a clutch force of 22 N or less, wherein the clutch force is measured as a maximum tension required to separate two brick specimens coupled to each other by pulling the brick specimens in a vertical direction at a speed of 10 mm/min using a universal testing machine (Z010, Zwick Roell Co.).

3. The thermoplastic resin composition according to claim 1, wherein the thermoplastic resin composition has a clutch force increase rate of 15 % or less before and after performing thermal aging of brick specimens at a temperature of 57 °C for 24 hours, wherein the clutch force is measured as a maximum tension required to separate two brick specimens coupled to each other by pulling the brick specimens in a vertical direction at a speed of 10 mm/min using a universal testing machine (Z010, Zwick Roell Co.).

4. The thermoplastic resin composition according to claim 1, wherein the base resin comprises 10 to 50 % by weight of the vinyl cyanide compound-conjugated diene rubber-aromatic vinyl compound graft copolymer (A), 0.1 to 10 % by weight of the alkyl acrylate rubber-vinyl cyanide compound-aromatic vinyl compound graft copolymer (B), and 40 to 80 % by weight of the aromatic vinyl compound-vinyl cyanide compound copolymer (C).

5. The thermoplastic resin composition according to claim 1, wherein the graft copolymer (A) comprises 50 to 80 % by weight of conjugated diene rubber, 5 to 20 % by weight of a vinyl cyanide compound, and 10 to 40 % by weight of an aromatic vinyl compound.

6. The thermoplastic resin composition according to claim 1, wherein, in the copolymer (B), a vinyl cyanide compound-aromatic vinyl compound copolymer grafted onto alkyl acrylate rubber has a weight average molecular weight of 166,000 to 250,000 g/mol.

7. The thermoplastic resin composition according to claim 1, wherein the graft copolymer (B) comprises 30 to 60 % by weight of alkyl acrylate rubber, 10 to 30 % by weight of a vinyl cyanide compound, and 15 to 45 % by weight of an aromatic vinyl compound.

8. The thermoplastic resin composition according to claim 1, wherein the copolymer (C) comprises 20 to 40 % by weight of a vinyl cyanide compound and 60 to 80 % by weight of an aromatic vinyl compound.

9. The thermoplastic resin composition according to claim 4, wherein the base resin further comprises 1 to 12 % by weight of an alkyl methacrylate compound-vinyl cyanide compound-aromatic vinyl compound copolymer (E).

10. The thermoplastic resin composition according to claim 9, wherein the copolymer (E) comprises 40 to 70 % by weight of an alkyl methacrylate compound, 1 to 20 % by weight of a vinyl cyanide compound, and 20 to 50 % by weight of an aromatic vinyl compound.

11. The thermoplastic resin composition according to claim 1, wherein the polysiloxane (D) has a kinematic viscosity of 700,000 to 3,000,000 cSt as measured according to ASTM D-445.

12. The thermoplastic resin composition according to claim 1, wherein the polysiloxane (D) comprises one or more selected from the group consisting of polydimethylsiloxane, polydiphenylsiloxane, polymethylphenylsiloxane, and polymethylhydrogensiloxane.

13. A method of preparing a thermoplastic resin composition, comprising a step of kneading and extruding 100 parts by weight of a base resin comprising a vinyl cyanide compound-conjugated diene rubber-aromatic vinyl compound graft copolymer (A), an alkyl acrylate rubber-vinyl cyanide compound-aromatic vinyl compound graft copolymer (B), and an aromatic vinyl compound-vinyl cyanide compound copolymer (C) and 0.1 to 0.4 parts by weight of a polysiloxane (D) at 200 to 280 °C, wherein the graft copolymer (B) has a grafting degree of 42 % or more and is comprised in an amount of 0.1 to 10 % by weight based on 100 % by weight in total of the base resin.

14. A molded article, comprising the thermoplastic resin composition according to any one of claims 1 to 12.

[FIG. 1A]

[FIG. 1B]

[FIG. 1C]

1.5mm

1.5mm

1.5mm

[FIG. 2A]

[FIG. 2B]

[FIG. 2C]

[FIG. 2D]

<div align="center">

**INTERNATIONAL SEARCH REPORT**

</div>

| | International application No. |
|---|---|
| | **PCT/KR2021/015080** |

**A.    CLASSIFICATION OF SUBJECT MATTER**

**C08L 25/12**(2006.01)i; **C08L 55/02**(2006.01)i; **C08L 51/04**(2006.01)i; **C08L 33/06**(2006.01)i; **C08L 83/04**(2006.01)i; **C08F 279/04**(2006.01)i; **C08F 212/08**(2006.01)i; **C08F 220/44**(2006.01)i; **C08F 265/06**(2006.01)i; **C08F 220/18**(2006.01)i

According to International Patent Classification (IPC) or to both national classification and IPC

**B.    FIELDS SEARCHED**

Minimum documentation searched (classification system followed by classification symbols)

C08L 25/12(2006.01); C08F 265/06(2006.01); C08G 77/04(2006.01); C08L 25/04(2006.01); C08L 51/04(2006.01); C08L 55/02(2006.01); C08L 83/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 그라프트 공중합체(graft copolymer), 아크릴로니트릴(acrylonitrile), 부타디엔 고무(butadiene rubber), 아크릴레이트 고무(acrylate rubber), 스티렌(styrene), 폴리실록산(polysiloxane), 그라프트율(graft rate), 클러치 포스(clutch force)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2010-0022160 A (LG CHEM, LTD.) 02 March 2010 (2010-03-02)<br>See paragraphs [0067]-[0079]; claims 1, 3, 4 and 7; example 1; and table 1. | 1-14 |
| Y | KR 10-1681212 B1 (LOTTE ADVANCED MATERIALS CO., LTD.) 30 November 2016 (2016-11-30)<br>See paragraphs [0136] and [0137]; and claim 1. | 1-14 |
| A | KR 10-2013-0071156 A (CHEIL INDUSTRIES INC.) 28 June 2013 (2013-06-28)<br>See paragraphs [0098]-[0115]; and claim 1. | 1-14 |
| A | KR 10-1997-0070094 A (LG CHEM, LTD.) 07 November 1997 (1997-11-07)<br>See claims 1-5. | 1-14 |
| A | KR 10-2020-0035418 A (INEOS STYROLUTION GROUP GMBH) 03 April 2020 (2020-04-03)<br>See claims 1-8. | 1-14 |

☐ Further documents are listed in the continuation of Box C.      ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **28 January 2022** | **28 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/015080**

| Patent document cited in search report | | | Publication date (day/month/year) | Patent family member(s) | | | Publication date (day/month/year) |
|---|---|---|---|---|---|---|---|
| KR | 10-2010-0022160 | A | 02 March 2010 | CN | 101665606 | A | 10 March 2010 |
| | | | | CN | 101665606 | B | 16 July 2014 |
| | | | | CN | 103396617 | A | 20 November 2013 |
| | | | | CN | 103396617 | B | 22 July 2015 |
| | | | | DK | 2157129 | T3 | 13 August 2012 |
| | | | | EP | 2157129 | A1 | 24 February 2010 |
| | | | | EP | 2157129 | B1 | 16 May 2012 |
| | | | | US | 2010-0048798 | A1 | 25 February 2010 |
| | | | | US | 8198367 | B2 | 12 June 2012 |
| KR | 10-1681212 | B1 | 30 November 2016 | CN | 104419191 | A | 18 March 2015 |
| | | | | CN | 104419191 | B | 12 April 2017 |
| | | | | DE | 102014217622 | A1 | 05 March 2015 |
| | | | | DE | 102014217622 | B4 | 11 July 2019 |
| | | | | US | 2015-0065652 | A1 | 05 March 2015 |
| | | | | US | 9447275 | B2 | 20 September 2016 |
| KR | 10-2013-0071156 | A | 28 June 2013 | WO | 2013-094844 | A1 | 27 June 2013 |
| KR | 10-1997-0070094 | A | 07 November 1997 | None | | | |
| KR | 10-2020-0035418 | A | 03 April 2020 | CN | 111247205 | A | 05 June 2020 |
| | | | | EP | 3658623 | A1 | 03 June 2020 |
| | | | | US | 2020-0148872 | A1 | 14 May 2020 |
| | | | | WO | 2019-020677 | A1 | 31 January 2019 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200143292
- KR 1020210141840
- KR 100717926 B1